# EUROPÄISCHE PATENTANMELDUNG

(11) **EP 4 755 835 A1**
(43) Veröffentlichungstag der Anmeldung: **10.06.2026**
(21) Anmeldenummer: 24217319.3
(22) Anmeldetag: 04.12.2024
(51) Int. Cl.: B66B 31/00, E04G 1/36

(54) **VERFAHREN UND WÄGESYSTEM ZUM ÜBERWACHEN EINES AUF EINER PERSONENTRANSPORTANLAGE ERRICHTETEN GERÜSTS**

(71) Anmelder: INVENTIO AG, 6052 Hergiswil (CH)
(72) Erfinder: Wagenleitner, Georg, 4575 Roßleithen (AT); Ludwig, Johann, 1080 Wien (AT)
(74) Vertreter: Inventio AG

(57) **Zusammenfassung**

Die vorliegende Erfindung bezieht sich auf ein Verfahren zum Überwachen eines auf einer Personentransportanlage (100) errichteten Gerüsts (106), wobei beim Aufbau (200) des Gerüsts (106) je eine Wägeeinheit (112) eines mehrteiligen Wägesystems (102) zwischen einen Lasteinleitungspunkt (108) des Gerüsts (106) und einem Auflagepunkt (110) auf der Personentransportanlage (100) angeordnet wird, wobei nach dem Aufbau (200) unter Verwendung der Wägeeinheit (112) eine in den Auflagepunkt (110) eingeleitete Last (114) bestimmt wird und eine Warnung (118) ausgegeben wird, wenn die Last (114) eine vordefinierte Warnlast (116) überschreitet.

## Beschreibung

Die vorliegende Erfindung betrifft ein Verfahren zum Überwachen eines auf einer Personentransportanlage errichteten Gerüsts, sowie ein Wägesystem zum Überwachen eines auf einer Personentransportanlage errichteten Gerüsts.

Eine Personentransportanlage kann eine Fahrtreppe oder ein Fahrsteig sein. Die Personentransportanlage ist dazu eingerichtet, Personen oder Gegenstände in Gebäuden beziehungsweise Bauwerken zu befördern. Ein Beförderungsweg ist dabei im Fall von Fahrtreppen stark geneigt, im Fall von Fahrsteigen horizontal oder allenfalls bis zu einer Steigung von maximal 12% geneigt.

Zum Durchführen von bestimmten Arbeiten am Bauwerk kann es erforderlich sein, einen Bereich oberhalb des Fahrsteigs oder der Fahrtreppe zu erreichen. Dazu kann ein Gerüst um die Personentransportanlage herum aufgebaut werden und die Personentransportanlage durch eine Aussparung des Gerüsts verlaufen. Alternativ kann das Gerüst seitlich neben der Personentransportanlage aufgebaut werden und der Bereich oberhalb der Personentransportanlage durch über die Personentransportanlage ragende Ausleger erreicht werden.

In manchen Fällen sind der Aufbau eines Gerüsts um die Personentransportanlage herum und die Verwendung von Auslegern nicht praktikabel. Dann kann es erforderlich sein, das Gerüst direkt auf der Personentransportanlage aufzubauen. Dabei ist eine detaillierte Planung der Arbeiten und ein gewissenhafter Aufbau des Gerüsts notwendig, um Beschädigungen an der Personentransportanlage zu vermeiden.

Die JP 4317673 B2 beschreibt ein Arbeitsgerüst für eine Rolltreppe und ein Verfahren zum Zusammenbau desselben.

Es kann unter anderem ein Bedarf an einem alternativen, vorzugsweise verbesserten Verfahren zum Überwachen eines auf einer Personentransportanlage errichteten Gerüsts GR
und ein zur Überwachung geeignetes System bestehen. Das Verfahren soll hierbei einfach und/oder zuverlässig durchführbar sein, mithilfe einfacher und/oder kostengünstiger technischer Einrichtungen etabliert werden können und/oder dabei unterstützen können, eine Integrität der Personentransportanlage zu gewährleisten, beziehungsweise Beschädigungen an der Personentransportanlage vermeiden zu können.

Einem solchen Bedarf kann durch ein Verfahren zum Überwachen eines auf einer Personentransportanlage errichteten Gerüsts, sowie durch ein Wägesystem zum Überwachen eines auf einer Personentransportanlage errichteten Gerüsts gemäß den unabhängigen Ansprüchen, entsprochen werden. Vorteilhafte Ausführungsformen sind in den abhängigen Ansprüchen definiert und in der Beschreibung beschrieben beziehungsweise in den begleitenden Figuren dargestellt.

Gemäß einem ersten Aspekt der Erfindung wird ein Verfahren zum Überwachen eines auf einer Personentransportanlage errichteten Gerüsts vorgeschlagen, wobei beim Aufbau des Gerüsts je eine Wägeeinheit eines mehrteiligen Wägesystems zwischen einen Lasteinleitungspunkt des Gerüsts und einem Auflagepunkt auf der Personentransportanlage angeordnet wird. Nach dem Aufbau wird unter Verwendung der Wägeeinheit eine in den Auflagepunkt eingeleitete Last bestimmt und eine Warnung ausgegeben, wenn die Last eine vordefinierte Warnlast überschreitet. Der Merkmalszusatz "-punkt" bezeichnet in der vorliegenden Schrift eine räumlich definierte Stelle mit begrenzter, flächiger Ausdehnung und soll nicht als punktförmige Auflage mit infinitesimaler Fläche verstanden werden.

Gemäß einem zweiten Aspekt der Erfindung wird ein Wägesystem zum Überwachen eines auf einer Personentransportanlage errichteten Gerüsts vorgeschlagen, wobei das Wägesystem eine Vielzahl von Wägeeinheiten umfasst. Die einzelne Wägeeinheit ist dazu konfiguriert, beim Aufbau des Gerüsts zwischen einem Lasteinleitungspunkt des Gerüsts und einem Auflagepunkt auf der Personentransportanlage angeordnet zu werden. Zudem ist die Wägeeinheit dazu konfiguriert, nach dem Aufbau eine über den Lasteinleitungspunkt in den Auflagepunkt eingeleitete Last zu erfassen und eine Warnung auszugeben, wenn die Last eine vordefinierte Warnlast überschreitet.

Eine Personentransportanlage kann eine Fahrtreppe oder ein Fahrsteig sein. Die Personentransportanlage kann bewegliche Trittelemente aufweisen, die als Stufen beziehungsweise Paletten bezeichnet werden. Die Trittelemente sind miteinander zu einer endlosen Kette in Form eines Transportbandes, d.h. im Fall einer Fahrtreppe in Form eines Stufenbandes und im Fall eines Fahrsteigs in Form eines Palettenbandes, verbunden. Das Transportband ist ringförmig geschlossen und durch Führungsschienen umlaufend bewegbar in der Personentransportanlage geführt.

An einem ersten Ende der Personentransportanlage werden die Trittelemente unter einer ersten Abdeckung von einer Unterseite der Personentransportanlage an eine Oberseite der Personentransportanlage geschwenkt und bilden dabei eine im Wesentlichen lückenlose Transportfläche für Personen aus. Die Transportfläche tritt unter der ersten Abdeckung hervor und wird in einer Transportrichtung der Personentransportanlage zu einem zweiten Ende der Personentransportanlage bewegt. Am zweiten Ende läuft die Transportfläche unter eine zweite Abdeckung und wird dort wieder in die einzelnen Trittelemente aufgelöst, die zur Unterseite geschwenkt werden, wo sie wieder zum ersten Ende zurückbewegt werden. Die Abdeckungen weisen typischerweise eine Bodenplatte sowie eine daran angrenzende Kammplatte auf und überdecken insbesondere in Zutrittsbereichen der Personentransportanlage ein Volumen, in dem beispielsweise eine Umlenkung des Transportbandes und/oder eine Antriebseinheit aufgenommen sind.

Bei einem Fahrsteig ist die Transportfläche stufenlos, die Kanten benachbarter Trittelemente weisen also näherungsweise keinen Höhenunterschied zueinander auf. Die Transportfläche kann jedoch abschnittsweise unterschiedlich geneigt sein. Bei einer Fahrtreppe bilden die Trittelemente horizontale Teilbereiche der Transportfläche mit einem Höhenunterschied zueinander, also Stufen aus. Lediglich an den Enden des umlaufenden Verfahrwegs können die Trittelemente in je einem horizontalen Bereich ohne Höhenunterschied zueinander angeordnet sein.

Ein Gerüst kann eine temporär errichtbare Struktur sein. Das Gerüst kann aus unterschiedlichen vorgefertigten Teilen aufgebaut werden. Das Gerüst kann zumindest eine Arbeitsplattform aufweisen, die beispielsweise eine erhöhte Arbeitsfläche oberhalb einer Aufstellfläche des Gerüsts schafft. Die Aufstellfläche kann hier die Transportfläche und/oder eine der Abdeckungen der Personentransportanlage zumindest teilweise umfassen.

Die vorgefertigten Teile können beispielsweise Ständer zum Herstellen eines Höhenunterschieds, zumindest eine Planke zum Bereitstellen der Arbeitsfläche, Geländer zur Absturzsicherung, und Versteifungselemente zum Verhindern von Wankbewegungen des Gerüsts sein. Zusätzlich kann das Gerüst Durchstiege und Leitern umfassen. Lasteinleitungspunkte können insbesondere an unteren Enden der Ständer des Gerüsts angeordnet sein. Das Gerüst verfügt in der Regel über eine Mehrzahl von Lasteinleitungspunkten, d.h. wenigstens zwei, drei, vier oder mehr Lasteinleitungspunkte. Unter jedem Lasteinleitungspunkt kann ein Auflagepunkt angeordnet sein. Über jeden der Lasteinleitungspunkte kann somit zumindest ein Teil eines Gewichts des Gerüsts sowie gegebenenfalls ein Teil einer von dem Gerüst getragenen Last auf den zugehörigen Auflagepunkt übertragen werden.

Zwischen einem Lasteinleitungspunkt und einem Auflagepunkt kann jeweils eine Wägeeinheit angeordnet werden. Vorzugsweise sind hierbei an mehreren oder sogar allen der Vielzahl von Lasteinleitungspunkten und dem jeweils zugehörigen Auflagepunkt jeweils eine Wägeeinheit angeordnet. Je nach Ausführung des Gerüsts können die Lasteinleitungspunkte beziehungsweise die Auflagepunkte im Bereich der Transportfläche und/oder im Bereich der Abdeckungen am ersten und/oder zweiten Ende der Personentransportanlage angeordnet sein. Insbesondere können je zwei Lasteinleitungspunkte beziehungsweise Auflagepunkte auf einem Trittelement des Transportbandes angeordnet sein, d.h. die Lasteinleitungspunkte können paarweise vorgesehen sein. Auch im Bereich der Abdeckungen können die Lasteinleitungspunkte beziehungsweise die Auflagepunkte paarweise angeordnet sein.

Die Trittelemente des Transportbandes werden meist durch Führungsrollen in einer Führungsbahn beziehungsweise in Führungsschienen der Personentransportanlage geführt. Die Führungsrollen rollen auf der Führungsbahn ab und übertagen zumindest einen Anteil einer auf das jeweilige Trittelement wirkenden Last auf die Führungsbahn. Bei einem ebenen Fahrsteig beziehungsweise in einem ebenen Anfangsbereich und Endbereich einer Fahrtreppe wird die ganze Last auf die Führungsbahn übertragen. Im stufenförmigen Bereich einer Fahrtreppe und bei einem schrägen Fahrsteig wird ein winkelabhängiger Anteil der Last auf die Führungsbahn übertragen. Ein anderer winkelabhängiger Anteil der Last wird als Zugkraft auf die Kette des Transportbandes übertragen.

Die Führungsrollen weisen typischerweise lediglich eine linienförmige Kontaktfläche zur Führungsbahn auf. An der Kontaktfläche resultiert bei Lastübertragung eine hohe Flächenpressung. Besonders leise laufende kunststoffbeschichtete Führungsrollen sind empfindlich bei zu lange anhaltender, hoher Flächenpressung. Insbesondere im Stillstand kann ein Material der Führungsrollen und/oder ein Material der Führungsbahn durch eine zu hohe Flächenpressung plastisch verformt werden und dadurch eine dauerhafte Abplattung beziehungsweise eine dauerhafte Vertiefung ausbilden. Dann ist diese Führungsrolle beziehungsweise die Führungsbahn an dieser Stelle beschädigt und benötigt vor einer Wiederinbetriebnahme der Personentransportanlage eine Reparatur beziehungsweise einen Ersatz.

Die Abdeckungen an den Enden der Personentransportanlage weisen für einen schwellenarmen Zugang beziehungsweise Abgang von der Transportfläche eine geringe Dicke und somit eine begrenzte Biegesteifigkeit und Tragfähigkeit auf. Eine zu hohe Lasteinleitung kann eine Abdeckung plastisch verformen oder sogar zerbrechen. Durch die Verformung kann die Abdeckung auf den darunterliegenden Trittelementen aufliegen und bei Wiederinbetriebnahme der Personentransportanlage an den Trittelementen schleifen. Daher kann ein Austausch beschädigter Abdeckungen erforderlich werden.

Um Beschädigungen an der Personentransportanlage und insbesondere an deren Transportband einschließlich der dieses bildenden Trittelemente, d.h. Paletten oder Stufen, sowie an deren Abdeckungen zu vermeiden, wird hierin vorgeschlagen, zwischen Lasteinleitungspunkten des Gerüsts und Auflagepunkten an der Personentransportanlage jeweils ein Wägesystem anzuordnen, welches bei drohender Überbelastung eine Warnung ausgibt.

Die Trittelemente können je nach Ausführung und Position an der Personentransportanlage unterschiedliche Lasten tragen. Eine vordefinierte Warnlast kann kleiner als eine Last sein, bei der mit einer erhöhten Wahrscheinlichkeit Beschädigungen auftreten. Die Warnlast kann abhängig von dem Bauteil und/oder einer Position auf der Personentransportanlage sein. Beispielsweise können große Paletten und Stufen in horizontalen Bereichen 150 Kilogramm Traglast und damit Warnlast aufweisen. Stufen in geneigten Bereichen der Personentransportanlage können beispielsweise 200 Kilogramm Warnlast aufweisen. Kleine Paletten können gruppiert sein. Pro Gruppe kann die Warnlast 150 Kilogramm betragen.

Eine Wägeeinheit kann zumindest ein Kraftsensorelement, wie beispielsweise eine Kraftmessdose aufweisen. Das Kraftsensorelement kann sich unter Last geringfügig elastisch verformen. Die Verformung ist im Allgemeinen proportional zur Last und zu einer Steifigkeit des Kraftsensorelements. Die Verformung kann in einem elektrischen Signal abgebildet werden. Das elektrische Signal bildet somit die Last ab.

Die Warnung kann unter Verwendung einer Ausgabeeinrichtung der Wägeeinheit ausgegeben werden. Die Ausgabeeinrichtung kann auch als Signaleinrichtung oder Warneinrichtung bezeichnet werden. Jede Wägeeinheit kann eine Ausgabeeinrichtung aufweisen. Die Ausgabeeinrichtung kann beispielsweise ein optischer Signalgeber, wie eine Ampel oder eine Warnleuchte sein. Wenn die Last größer als die Warnlast ist, kann beispielsweise die Warnleuchte aufleuchten oder blinken. Eine Ampel kann beispielsweise grünes Licht zeigen, wenn die Last kleiner als die Warnlast ist. Wenn die Last sich an die Warnlast annähert, kann die Ampel gelbes Licht zeigen. Wenn die Warnlast erreicht wird, kann die Ampel rotes Licht zeigen. Gelbes Licht kann beispielsweise gezeigt werden, wenn 90% der Warnlast erreicht sind. Alternativ oder ergänzend kann die Wägeeinheit auch ein Display aufweisen, auf dem die aktuelle Last angezeigt wird. Wenn die Warnlast überschritten wird, kann das Display beispielsweise blinken, seine Farbe verändern und/oder Warnsymbole anzeigen. Als weitere Alternative kann die Ausgabeeinrichtung Warnungen auch in anderer, für Menschen wahrnehmbarer Form, d.h. beispielsweise akustisch, haptisch, etc., ausgeben. Die Ausgabeeinrichtung kann in die Wägeeinheit integriert sein, d.h. beispielsweise in einem Gehäuse der Wägeeinheit aufgenommen sein und/oder von einer Energieversorgung der Wägeeinheit mitversorgt werden.

Die Wägeeinheiten können über Kabel oder drahtlos miteinander verbunden sein und miteinander kommunizieren, d.h. Daten oder Signale austauschen. Dann können mehrere oder auch alle Wägeeinheiten die Warnung bereitstellen, wenn z.B. die Last an einer Wägeeinheit größer als die Warnlast ist oder wenn eine Summe von Lasten, welche durch mehrere Wägeeinheiten erkannt werden, eine vordefinierte Gesamt-Warnlast überschreitet.

Die Warnung kann alternativ oder ergänzend unter Verwendung einer Warneinrichtung der Personentransportanlage ausgegeben werden. Die Personentransportanlage kann eine optische und/oder akustische Warneinrichtung aufweisen. Beispielsweise kann die Personentransportanlage einen Summer oder eine Hupe aufweisen, die ein akustisches Warnsignal ausgeben, wenn die Warnlast überschritten wird. Die Personentransportanlage kann eine oder mehrere Signalleuchten aufweisen, die als Warneinrichtung verwendet werden können. Die Signalleuchten können beispielsweise ihre Farbe ändern und/oder blinken, wenn die Warnlast überschritten wird. Das Wägesystem kann über Kabel oder drahtlos mit der Personentransportanlage gekoppelt sein, um die Warnung an die Personentransportanlage zu übertragen. Insbesondere kann das Wägesystem mit einer Steuerung der Personentransportanlage, welche im Normalfall einen Betrieb der Personentransportanlage steuert, gekoppelt sein, um mit dieser Signale oder Daten auszutauschen.

Die Warnung kann als weitere Alternative oder Ergänzung über ein mit dem Wägesystem gekoppeltes Mobilgerät ausgegeben werden. Ein Mobilgerät kann eine Zentraleinheit des Wägesystems sein. Das Mobilgerät kann mit allen Wägeeinheiten des Wägesystems drahtlos gekoppelt sein, um mit diesen Signale oder Daten auszutauschen. Das Mobilgerät kann portabel sein. Es kann beispielsweise ein Smartphone oder ein Tablett sein. Das Mobilgerät kann aber auch ein für den Arbeitseinsatz geschütztes, also stoßgeschütztes, staubgeschütztes und/oder feuchtigkeitsgeschütztes Gerät sein. Das Mobilgerät kann die Warnung optisch, akustisch und/oder haptisch ausgeben. Das Mobilgerät kann auch die einzelnen Lasten aller Wägeeinheiten anzeigen und eine Gesamtlast aller Wägeeinheiten darstellen. Das Mobilgerät kann eine weitere Warnung ausgeben, wenn die Gesamtlast größer als eine Gesamtwamlast ist. Die Gesamtwarnlast kann beispielsweise 600 Kilogramm betragen.

Grundsätzlich sollte das Transportband für Bewegungen blockiert sein, solange ein Gerüst darauf errichtet ist. Ein mit der Steuerung der Personentransportanlag verbundenes Wägesystem kann hierbei sicherstellen, dass keine Bewegungen des Transportbandes ausgelöst werden können, wenn das Wägesystem eine Last erkennt.

Wenn das Gerüst aber beispielsweise nur zwei Meter lang ist und eine eher niedere Bauhöhe von beispielsweise kleiner zweieinhalb Meter aufweist, kann auch ein Bewegen des Gerüstes mittels des Transportbandes in Erwägung gezogen werden. In dieser Situation kann nach dem Aufbau des Gerüsts und des Wägesystems unter Verwendung aller verwendeten Wägeeinheiten des Wägesystems, ein Leergewicht des Gerüsts bestimmt werden. Ein Bewegen des Transportbandes der Personentransportanlage kann anschließend blockiert werden, wenn die von dem Wägesystem erkannten Lasten summiert größer als das Leergewicht des Gerüsts sind. Das Transportband soll aus Sicherheitsgründen mit dem darauf errichteten Gerüst allenfalls dann bewegt werden, wenn sich niemand auf dem Gerüst aufhält. Durch eine Überprüfung des Leergewichts kann sicher erkannt werden, ob sich eine Person auf dem Gerüst befindet. Damit Werkzeuge während des Bewegens auf dem Gerüst verbleiben können, kann das Bewegen erst blockiert werden, wenn das Gesamtgewicht um eine Toleranz größer als das Leergewicht ist. Die Toleranz kann beispielsweise dem Gewicht eines beladenen Werkzeugkoffers entsprechen, jedoch geringer als ein Gewicht einer Person sein. Beispielsweise kann die Toleranz größer als 5 kg, größer als 10 kg oder größer als 20 kg sein, jedoch typischerweise geringer als 60 kg oder geringer als 40 kg.

Eine Maximallast kann dokumentiert werden, wenn die Last am Auflagepunkt die vordefinierte Warnlast überschreitet. Zum Abschätzen einer Schwere einer Beschädigung der Personentransportanlage kann die Höhe einer eingeleiteten Lastspitze ausschlaggebend sein. Daher kann ein höchster gemessener Wert der Last als die Maximallast dokumentiert werden. Dabei kann die Maximallast mit einer eindeutigen Identifikation der betroffenen Wägeeinheit, einem Zeitpunkt der Überschreitung und/oder einer Dauer der Überschreitung hinterlegt werden. Die Dokumentation kann beispielsweise in einer Speichereinrichtung gespeichert werden, welche in der Wägeeinheit, im Wägesystem oder in einem externen, damit verbundenen Gerät wie beispielsweise in der Steuerung der Personentransportanlage vorgesehen ist. Diese Informationen können im Nachhinein ausgewertet werden. Wenn die Warnlast überschritten wurde, kann auch eine Überprüfungsanforderung an eine für den Aufbau des Gerüsts verantwortliche Stelle ausgegeben werden.

Die Last kann mit einer anlagenspezifischen Höchstlast verglichen werden. Es kann eine mögliche Beschädigung der Personentransportanlage gemeldet werden, wenn die Last größer als die Höchstlast ist. Die Höchstlast kann größer als die Warnlast sein. Wenn die Höchstlast überschritten worden ist, ist eine Beschädigung der Personentransportanlage nicht mehr nur möglich, sondern wahrscheinlich. Dann soll die Personentransportanlage erst wieder in Betrieb genommen werden, wenn sie überprüft und gegebenenfalls instandgesetzt wurde. Die mögliche Beschädigung kann beispielsweise an eine Servicefirma und/oder einen Hersteller der Personentransportanlage gemeldet werden. Die mögliche Beschädigung kann beispielsweise durch eine automatisiert gesendete Nachricht gemeldet werden. Die Nachricht kann bisher gemessene Lasten aller Wägeeinheiten des Wägesystems umfassen.

Es kann eine Wartungsanleitung ausgegeben werden, wenn die Last größer als die Höchstlast ist beziehungsweise war. Die Wartungsanleitung kann beispielsweise zu überprüfende beziehungsweise auszutauschende Teile, Sicherheitsvorkehrungen und/oder eine Demontage/Montageanleitung umfassen. Durch eine Wartungsanleitung kann eine mögliche Beschädigung schnell erkannt werden und erforderliche Schritte zur Instandsetzung eingeleitet werden.

Nach dem Aufbau kann zumindest ein Foto des Wägesystems aufgenommen und ausgewertet werden. Anschließend kann eine Nutzung des Gerüsts freigegeben werden, wenn eine bestimmungsgemäße Anordnung des Wägesystems erkannt wird. Die Anordnung des Wägesystems zwischen dem Gerüst und der Personentransportanlage ist immer im Wesentlichen ähnlich. Das Foto kann zur Dokumentation gespeichert werden. Das Foto kann automatisiert ausgewertet werden. Das Foto kann unter Verwendung von maschinellem Lernen ausgewertet werden und Fehler beim Aufbau erkannt werden, da die bestimmungsgemäße Anordnung nach definierten Vorgaben erfolgt.

Dabei kann eine Korrekturanweisung ausgegeben werden, wenn eine nicht bestimmungsgemäße Anordnung einer Wägeeinheit erkannt wird. Die fehlerhafte Anordnung kann dokumentiert werden und nach der Korrektur erneut anhand eines Fotos überprüft werden.

Das Wägesystem gemäß einer Ausführungsform des zweiten Aspekts der Erfindung umfasst mehrere Wägeeinheiten, welche jeweils zwischen einem von mehreren Lasteinleitungspunkten eines Gerüsts und einem zugehörigen Auflagepunkt auf der Personentransportanlage angeordnet werden können. Das Wägesystem kann dabei dazu konfiguriert sein, eine Ausführungsform des hierin beschriebenen Verfahrens zu implementieren. Demgemäß kann das Wägesystem bei Überschreiten einer vordefinierten Warnlast ein Ausgeben einer Warnung veranlassen.

Die Wägeeinheit kann als Schnittstelle zum Auflagepunkt eine Auflageplatte aufweisen. Anders ausgedrückt, kann eine Auflageplatte zwischen der Wägeeinheit und einer den Auflagepunkt bildenden Auflagefläche der Personentransportanlage zwischengelagert sein. Die Auflageplatte kann dabei mit der Oberfläche der Personentransportanlage eine größere Kontaktfläche aufweisen als mit der Wägeeinheit. Die Auflageplatte kann die Last auf eine definierte Auflagefläche der Personentransportanlage verteilen. Die Auflageplatte kann eine punktuelle Belastung des jeweiligen Trittelements verhindern. Hierzu kann die Auflageplatte eine ausreichend hohe Steifigkeit beziehungsweise Dicke aufweisen. Die Auflageplatte kann an Abmessungen des Trittelements angepasst sein, um die vorhandene Fläche möglichst gut auszunutzen.

Zwei Wägeeinheiten können auf einer gemeinsamen Auflageplatte angeordnet sein, da der Abstand zwischen den zwei Lasteinleitungspunkten eines Ständers bekannt und in der Regel immer gleich ist. Dann kann die Last auf einem Ständer über zwei Lasteinleitungspunkte auf zwei Wägeeinheiten und in eine durchgehende Platte eingeleitet werden. Durch eine kombinierte Auflageplatte kann die Auflagefläche maximiert sein.

Die Auflageplatte kann konturiert sein. Die Auflageplatte kann an einer Unterseite eine Gegenkontur zur Auflagefläche aufweisen. Anders ausgedrückt können aneinander angrenzende Oberflächen der Auflageplatte einerseits und der Auflagefläche an der Personentransportanlage andererseits komplementär zueinander konturiert sein. Die Auflagefläche kann insbesondere parallel verlaufende, gleich hohe Rippen aufweisen. Die Auflageplatte kann ebenfalls Rippen aufweisen, die zwischen die Rippen der Auflagefläche passen und die Last in Nuten zwischen den Rippen einleiten. Die Kontur kann zusätzlich ein Verrutschen der Auflageplatte auf der Stufenoberfläche beziehungsweise Palettenoberfläche zumindest quer zur Personentransportanlage verhindern.

Alternativ oder ergänzend kann die Auflageplatte einen elastischen Belag aufweisen, der Unebenheiten der Auflagefläche im Wesentlichen kompensieren kann, um eine punktuelle Belastung des Trittelements unter der Auflageplatte zu vermeiden. Der Belag kann eine höhere Elastizität aufweisen als die Auflageplatte. Der Belag kann beispielsweise aus einem Kunststoff, insbesondere einem Elastomer bestehen. Der Belag kann eine Dicke aufweisen, die typischerweise geringer ist als eine Dicke der Auflageplatte. Beispielsweise kann der Belag eine Dicke von weniger als 1 cm oder weniger als 5 mm, vorzugsweise jedoch mehr als 0,5 mm oder mehr als 1,5 mm aufweisen. Der Belag kann rutschhemmende Eigenschaften aufweisen.

Die Wägeeinheit kann eine Lasteinleitungsschnittstelle aufweisen. Die Lasteinleitungsschnittstelle kann eine Aufnahmekontur für einen Ständerfuß des Lasteinleitungspunktes aufweisen. Das Gerüst kann an den Lasteinleitungspunkten höhenverstellbare Ständerfüße aufweisen. Die Ständerfüße können standardisiert sein und beispielsweise eine rechteckige beziehungsweise quadratische Fußplatte und eine Gewindespindel mit Flügelmutter darauf aufweisen. Der Lasteinleitungspunkt an dem Ständer liegt auf der höhenverstellbaren Mutter auf. Die Aufnahmekontur kann eine Gegenkontur zur Fußplatte sein. Die Gegenkontur kann eine Vertiefung sein. Damit kann der Ständerfuß nicht seitlich wegrutschen.

Alternativ kann die Lasteinleitungsschnittstelle als Ständerfuß zum Aufstecken des Lasteinleitungspunkts ausgebildet sein. Die Wägeeinheit kann eine Gewindespindel mit Flügelmutter aufweisen. Die Gewindespindel kann fest mit der Wägeeinheit verbunden sein. Mit anderen Worten kann die Wägeeinheit in einem Ständerfuß integriert sein.

Wenn zwei Wägeeinheiten auf einer Auflageplatte angeordnet sind, können die Lasteinleitungsschnittstellen in einem standardisierten Abstand zueinander angeordnet sein. Dann kann der Ständer einfach auf die vorab richtig positionierten Gewindespindeln aufgesteckt werden.

Es wird darauf hingewiesen, dass einige der möglichen Merkmale und Vorteile der Erfindung hierin mit Bezug auf unterschiedliche Ausführungsformen von Verfahren einerseits und von Vorrichtungen andererseits beschrieben sind. Ein Fachmann erkennt, dass die Merkmale in geeigneter Weise kombiniert, angepasst oder ausgetauscht werden können, um zu weiteren Ausfuhrungsformen der Erfindung zu gelangen.

Nachfolgend werden Ausfiihrungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt eine Darstellung einer Personentransportanlage mit einem Wägesystem gemäß einem Ausführungsbeispiel; und
Fig. 2 zeigt einen Ablauf eines Verfahrens zum Überwachen gemäß einem Ausführungsbeispiel.

Die Figuren sind lediglich schematisch und nicht maßstabsgetreu. Gleiche Bezugszeichen bezeichnen gleiche oder gleichwirkende Merkmale.

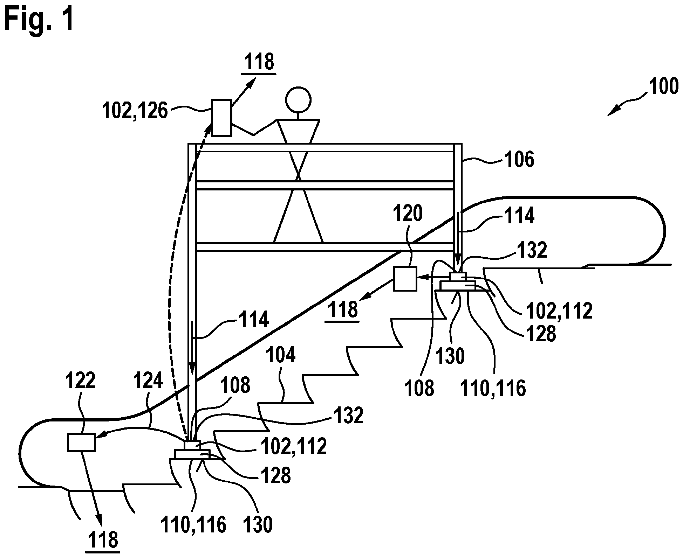

Fig. 1 zeigt eine Darstellung einer Personentransportanlage 100 mit einem Wägesystem 102 gemäß einem Ausführungsbeispiel. Die Personentransportanlage 100 ist hier eine Fahrtreppe. Auf einer Transportfläche 104 der Personentransportanlage 100 ist ein Gerüst 106 errichtet. Zwischen Lasteinleitungspunkten 108 des Gerüsts 106 und Auflagepunkten 110 der Personentransportanlage 100 sind jeweils Wägeeinheiten 112 des Wägesystems 102 angeordnet. Jede Wägeeinheit 112 misst eine über den Lasteinleitungspunkt 108 in die Personentransportanlage 100 eingeleitete Last 114.

Wenn die Last 114 an einer der Wägeeinheiten 112 größer als eine Warnlast 116 des jeweiligen Auflagepunkts 110 ist, wird eine Warnung 118 ausgegeben.

In einem Ausführungsbeispiel wird die Warnung 118 über eine Ausgabeeinrichtung 120 der betroffenen Wägeeinheit 112 ausgegeben. Die Ausgabeeinrichtung kann beispielsweise ein Display oder eine Signaleinrichtung sein.

In einem Ausführungsbeispiel wird die Warnung 118 über eine Warneinrichtung 122 der Personentransportanlage 100 ausgegeben. Die Warneinrichtung 122 ist dabei akustisch und/oder optisch. Dazu sind die Wägeeinheiten 112 miteinander und mit der Personentransportanlage 100 vernetzt. Die Lasten 114 werden dabei zentral überwacht und eine Warnanforderung 124 an die Personentransportanlage gesendet, wenn die Last an einer Wägeeinheit 112 größer als die Warnlast 116 ist.

In einem Ausführungsbeispiel wird die Warnung 118 über ein Mobilgerät 126 ausgegeben. Das Mobilgerät 126 ist mit allen Wägeeinheiten 112 gekoppelt. Insbesondere ist das Mobilgerät 126 per Funk mit den Wägeeinheiten 112 gekoppelt. Das Mobilgerät 126 ist als zentrale Auswerteeinrichtung des Wägesystems 102 konfiguriert.

In einem Ausführungsbeispiel weisen die Wägeeinheiten 112 je eine Auflageplatte 128 auf. Die Auflageplatte 128 verteilt die Last 114 auf eine Auflagefläche 130 der Personentransportanlage 100. Durch die Auflageplatten 128 kann eine punktuelle Belastung der Personentransportanlage 100 vermieden werden.

In einem Ausführungsbeispiel ist die Auflageplatte 128 mit einer Gegenkontur zur Transportfläche 104 ausgeführt. Dadurch kann eine Beschädigung einer Oberfläche der Personentransportanlage 100 sicher vermieden werden.

In einem Ausführungsbeispiel weisen die Wägeeinheiten 112 jeweils eine Lasteinleitungsschnittstelle 132 auf. Die Lasteinleitungsschnittstelle 132 schafft einen Formschluss zum Gerüst 106. Durch die Lasteinleitungsschnittstelle 132 kann das Gerüst 106 auf der Wägeeinheit 112 nicht seitlich verrutschen. Dabei kann die Lasteinleitungsschnittstelle 132 dazu konfiguriert sein, einen Ständerfuß des Gerüsts aufzunehmen oder den Ständerfuß zu ersetzen.

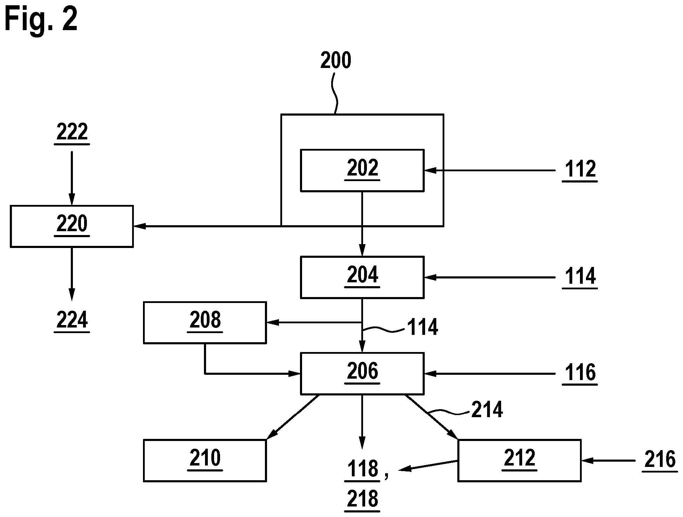

Fig. 2 zeigt einen Ablauf eines Verfahrens zum Überwachen eines auf einer Personentransportanlage 100 errichteten Gerüsts 106. Dabei erfolgt während eines Aufbaus 200 des Gerüsts 106 ein Anordnen 202 von Wägeeinheiten 112 zwischen Lasteinleitungspunkten 108 des Gerüsts 106 und Auflagepunkten 110 der Personentransportanlage 100. Nach dem Aufbau 200 erfolgt unter Verwendung der Wägeeinheiten 112 jeweils ein Messen 204 einer in den jeweiligen Auflagepunkt eingeleiteten Last 114. Dabei wird ein Vergleich 206 zwischen der Last 114 und einer für den Auflagepunkt spezifischen Warnlast 116 durchgeführt und eine Warnung 118 ausgegeben, wenn die Last 114 größer als die Warnlast 116 ist.

In einem Ausführungsbeispiel wird nach dem Aufbau 200 unter Verwendung aller Lasten 114 ein Leergewicht 208 des Gerüsts gemessen. Beim Verwenden des Gerüsts 106 werden die summierten Lasten 114 mit dem Leergewicht 208 verglichen und ein Bewegen 210 der Personentransportanlage verhindert, wenn die Lasten 114 größer als das Leergewicht 208 ist, um das Bewegen 210 des Gerüsts mit Personen darauf zu verhindern.

In einem Ausführungsbeispiel erfolgt eine Dokumentation 212 einer Maximallast 214, wenn die Last 114 größer als die Warnlast 116 ist. Dabei kann die Maximallast 214 mit einer für den jeweiligen Auflagepunkt 110 vordefinierten Höchstlast 216 verglichen werden und die Warnung 118 um mögliche Schäden erweitert werden.

In einem Ausführungsbeispiel wird ferner eine Wartungsanleitung 218 zum Beheben der Schäden ausgegeben, wenn die Last 114 größer als die Warnlast 116 ist.

In einem Ausführungsbeispiel erfolgt nach oder während des Aufbaus 200 eine Auswertung 220 zumindest eines Fotos 222 des Gerüsts. Dabei wird die Benutzung des Gerüsts 106 freigegeben, wenn eine bestimmungsgemäße Anordnung des Wägesystems 102 erkannt wird.

In einem Ausführungsbeispiel wird eine Korrekturanweisung 224 ausgegeben, wenn eine falsche Anordnung einer Wägeeinheit 112 erkannt wird.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Verfahren zum Überwachen eines auf einer Personentransportanlage (100) errichteten Gerüsts (106), wobei beim Aufbau (200) des Gerüsts (106) je eine Wägeeinheit (112) eines mehrteiligen Wägesystems (102) zwischen einen Lasteinleitungspunkt (108) des Gerüsts (106) und einem Auflagepunkt (110) auf der Personentransportanlage (100) angeordnet wird, wobei nach dem Aufbau (200) unter Verwendung der Wägeeinheit (112) eine in den Auflagepunkt (110) eingeleitete Last (114) bestimmt wird und eine Warnung (118) ausgegeben wird, wenn die Last (114) eine vordefinierte Warnlast (116) überschreitet.

2. Verfahren nach Anspruch 1, wobei die Warnung (118) unter Verwendung einer Ausgabeeinrichtung (120) der Wägeeinheit (112) ausgegeben wird.

3. Verfahren nach einem der vorangehenden Ansprüche, wobei die Warnung (118) unter Verwendung einer Warneinrichtung (122) der Personentransportanlage (100) ausgegeben wird.

4. Verfahren nach einem der vorangehenden Ansprüche, wobei die Warnung (118) über ein mit dem Wägesystem (102) gekoppeltes Mobilgerät (126) ausgegeben wird.

5. Verfahren nach einem der vorangehenden Ansprüche, wobei nach dem Aufbau (200) unter Verwendung aller verwendeten Wägeeinheiten (112) des Wägesystems (102) ein Leergewicht (208) des Gerüsts (106) bestimmt wird, wobei ein Bewegen (210) der Personentransportanlage (100) blockiert wird, wenn die Lasten (114) summiert größer als das Leergewicht (208) sind.

6. Verfahren nach einem der vorangehenden Ansprüche, wobei eine Maximallast (214) dokumentiert wird, wenn die Last (114) am Auflagepunkt (110) die vordefinierte Warnlast (116) überschreitet.

7. Verfahren nach einem der vorangehenden Ansprüche, wobei die Last (114) mit einer anlagenspezifischen Höchstlast (216) verglichen wird und eine mögliche Beschädigung der Personentransportanlage (100) gemeldet wird, wenn die Last (114) größer als die Höchstlast (216) ist.

8. Verfahren nach Anspruch 7, wobei eine Wartungsanleitung (218) ausgegeben wird, wenn die Last (114) größer als die Höchstlast (216) ist.

9. Verfahren nach einem der vorangehenden Ansprüche, wobei nach dem Aufbau (200) zumindest ein Foto (222) des Wägesystems (102) ausgewertet wird, wobei eine Nutzung des Gerüsts (106) freigegeben wird, wenn eine bestimmungsgemäße Anordnung des Wägesystems (102) erkannt wird.

10. Verfahren nach Anspruch 9, wobei eine Korrekturanweisung (224) ausgegeben wird, wenn eine nicht bestimmungsgemäße Anordnung einer Wägeeinheit (112) erkannt wird.

11. Wägesystem (102) zum Überwachen eines auf einer Personentransportanlage (100) errichteten Gerüsts (106), wobei das Wägesystem (102) eine Vielzahl von Wägeeinheiten (112) umfasst, wobei die einzelne Wägeeinheit (112) dazu konfiguriert ist, beim Aufbau (200) des Gerüsts (106) zwischen einem Lasteinleitungspunkt (108) des Gerüsts (106) und einem Auflagepunkt (110) auf der Personentransportanlage (100) angeordnet zu werden, nach dem Aufbau (200) eine über den Lasteinleitungspunkt (108) in den Auflagepunkt (110) eingeleitete Last (114) zu erfassen und eine Warnung (118) auszugeben, wenn die Last (114) eine vordefinierte Warnlast (116) überschreitet.

12. Wägesystem (102) nach Anspruch 11, wobei die Wägeeinheit (112) als Schnittstelle zum Auflagepunkt (110) eine Auflageplatte (128) aufweist, welche die Last (114) auf eine definierte Auflagefläche (130) der Personentransportanlage (100) verteilt.

13. Wägesystem (102) nach Anspruch 12, wobei die Auflageplatte (128) konturiert ist und eine Gegenkontur zur Auflagefläche (130) aufweist und/oder wobei die Auflageplatte (128) einen elastischen Belag aufweist.

14. Wägesystem (102) nach einem der Ansprüche 11 bis 13, wobei die Wägeeinheit (112) eine Lasteinleitungsschnittstelle (132) aufweist, wobei die Lasteinleitungsschnittstelle (132) eine Aufnahmekontur für einen Ständerfuß des Lasteinleitungspunkts (108) aufweist.

15. Wägesystem (102) nach einem der Ansprüche 11 bis 13, wobei die Wägeeinheit (112) eine Lasteinleitungsschnittstelle (132) aufweist, wobei die Lasteinleitungsschnittstelle (132) als Ständerfuß zum Aufstecken des Lasteinleitungspunkts (108) beim Aufbau (200) ausgebildet ist.
